# EUROPEAN PATENT SPECIFICATION

(11) **EP 3 845 099 B1**
(45) Date of publication and mention of the grant of the patent: **02.08.2023**
(21) Application number: 20182342.4
(22) Date of filing: 25.06.2020
(51) Int. Cl.: A47J 37/06, A47J 37/07

(54) **GAS AIR FRYER**
GAS-LUFT-FRITTEUSE
FRITEUSE À AIR À GAZ

(30) Priority: 30.12.2019 US 201962954985 P; 14.04.2020 US 202016848019
(43) Date of publication of application: 07.07.2021
(73) Proprietor: Team International Group of America Inc., Miramar, FL 33025 (US)
(72) Inventor: Murad, Uri, Hollywood, FL Florida 33021 (US); He, Arno, Guangdong, Guangdong (CN); Simon, Paul, Elizabethtown, KY Kentucky 42701 (US); Giebel, Michael, Joplin, MO Missouri 64804 (US)
(74) Representative: Aldridge, Christopher Simon

(56) References cited:
- DE-U1-202013 010 033
- US-A- 5 121 737
- US-A1- 2005 034 716

## Description

### FIELD OF THE INVENTION:

The invention relates to apparatuses for frying foodstuffs in hot air and without submersion in cooking oil.

### BACKGROUND:

Common electrical air frying appliances include an electric heating element for heating air within the appliance and a blower for forcing the air over and around the foodstuffs to be air fried. Such appliances function adequately but are made only for indoor use and may cause smoke and undesired cooking fumes. Summertime is a very popular time for outdoor cooking. Many fried foods, such as fried chicken, onion rings, and fried claims are popular summertime food, but have so far required indoor cooking. Few food items are as historically paired as hamburgers and French fries, yet summertime burgers are typically cooked outdoors while French fries have so far required indoor cooking.

In order to simulate the qualities of properly deep-fried foods, air fried foods must be exposed to turbulent air having a temperature of approximately 220 degrees C. This ensures the even browning and crispiness like that which is obtained when cooking in hot oil. But such is difficult to obtain from a propane flame. While propane bums at a very high temperature, transferring that heat from the flame in a highly turbulent environment to obtain the needed air-frying temperature and turbulence at the food has so far been unobtainable.

There exists the need for an apparatus which allows for the outdoor cooking of fried foods, and such may be an object of the invention. There exists the need for an apparatus which allows for such outdoor cooking of fried foods in combination with outdoor grilling, and such may be an object of the invention. There exists the need for the ability to share fuel use, cooking utensils, clean-up, and other things between outdoor grilling and outdoor frying, and such may be an object of the invention. There exists the need for a system which causes a high enough temperature at its heat source to result in adequate air-frying conditions at the food, and such may be an object of the invention. There exists the need for a system which causes that high enough temperature by injecting air into the heat source using a blower that also causes the needed turbulence for those adequate air-frying conditions at the food, and such may be an object of the invention.

The burning of many fuels, including gas fuels, wood, charcoal, etc., results not only in the production of desirable heat for cooking, but also in the production of other undesirable products of combustion, such as CO, NOx, ash, carbon dust, etc. A drawback to air-frying foods in an airstream that is derived directly for combusting fuel is that the foods might be exposed to these undesirables, not only impairing the flavor and appearance of the cooked foods, but also being potentially unhealthful.

There exists the need for a means to air-fiy foods in air that is heated by combusting fuels while avoiding the exposure of the food to other products of the combustion of the fuel, and such may be an object of the invention.

Further needs and objects of the invention will become apparent upon a review of the following disclosure of exemplary embodiments.

US2005034716 (Harbin) discloses compact cooking appliance, such a portable grill or oven, that has a cooking region, a firebox disposed laterally rather than beneath the cooking region to generate heated gases, a heat exchanger disposed in heat-exchanging relationship with the heated gases, a blower or fan that circulates heated air within the cooking region.

### SUMMARY OF THE INVENTION:

The present invention is directed to an air frying apparatus as set out in accompanying claim 1. Preferred features are set out in the sub-claims.

Disclosed herein is a gas burning air-frying appliance of a gas burning air-frying accessory to an outdoor gas grill or griddle.

Also disclosed herein but not forming part of the invention is an air frying apparatus with a blower-burner portion and a chamber portion. The blower-burner portion may have an intake for receiving ambient air, a burner for heating the received air, a window in communication with the chamber portion, and a blower for dispersing the heated air into the chamber portion. The chamber portion may include a perforated basket for receiving foodstuff and may be adapted to allow access to the foodstuff by the dispersed heated air. The air heated by the burner is dispersed through the window to the chamber portion by the blower where it air-fries the foodstuff in the basket. The blower-burner portion and the chamber portion may be within a housing and the chamber portion may have a drawer adapted to be pulled from the housing to access the basket. The drawer may be covered by the housing during the air-frying and may be uncovered when pulled from the housing to allow the access to the basket. The chamber portion may have an outlet for exhausting the heated air from the chamber portion. The drawer may have a handle disposed in a front thereof, and the outlet may be directed rearwardly and away from the handle. The burner may be a gas burner. The blower may be an electric blower. The blower may cause the received air to feed a flame of the gas burner and thereby increase its temperature to increase the heated air's temperature. The heated air's increased temperature may be approximately 220 degrees C when reaching the chamber portion.

Also disclosed herein is a combination of a gas barbeque grill and the above air frying apparatus. The gas barbeque grill may provide the above housing. The drawer may be covered by the gas barbeque grill during the air-frying and may be uncovered when pulled from the gas barbeque grill to allow the access to the basket.

The air frying apparatus according to the invention comprises a burner, a blower, a heat exchanger, and a cooking chamber. The burner s adapted to combust fuel to create heat and other products of combustion. The blower is adapted to circulate a cooking airstream. The heat exchanger is adapted to allow passage of the heat from the combusted fuel while preventing passage of the other products of combustion into the cooking air stream. The blower is adapted to supply the heated cooking airstream from the heat exchanger to the cooking chamber to cook foodstuff disposed therein, wherein the outlet of the blower is arranged between the outlet of the heat exchanger and the cooking chamber, and whereby the other products of combustion are not supplied to the cooking chamber. The burner may be a gas burner. The blower may be an electric blower.

The apparatus may further have a housing and the cooking chamber may include a perforated tray for containing the foodstuff, disposable within the housing during cooking and removable from the housing to access the foodstuff. The tray may be covered by the housing during cooking and is uncovered when removed from the housing to allow the access to the tray. The apparatus may further be combined into an outdoor cooking appliance having a body that is the housing. The outdoor cooking appliance may have a cooking surface such as grill or griddle, and the burner, blower, heat exchanger, and cooking chamber may be disposed below the cooking surface.

The apparatus may further include a thermostat adapted for sensing temperature of the heated cooking airstream and in communication with one or both of the blower and the burner and adapted to control the one or both in response to the sensed temperature. The apparatus may have a selected temperature level and the thermostat may modify operation of the one or both when the sensed temperature reaches the selected temperature.

The apparatus may have one or more additional cooking chambers wherein one or more additional blowers may be adapted to selectively supply one or more additional heated cooking airstreams through the heat exchanger to the one or more additional cooking chambers to selectively cook foodstuff disposed therein. The cooking chambers may be disposed within drawers.

The apparatus may have one or more warming chambers for maintaining cooked food at a servable temperature. Those warming chambers may be disposed within drawers that are fashioned similarly to the cooking chamber drawers. The warming chambers may be warmed by a lower-temperature version of the heating system of the cooking chambers or may be warmed by conduction or convection from adjacent cooking chambers or from the cooking appliance.

The invention may also be embodied in or practiced using, in combination, the outdoor cooking appliance and the air frying apparatus as described above.

Further features and aspects of the invention are disclosed with more specificity in the Detailed Description and Drawings provided herein and showing exemplary embodiments of the invention.

### BRIEF DESCRIPTION OF THE DRAWINGS:

Exemplary embodiments of a gas burning air frying accessory for a gas outdoor cooking appliance is shown in the accompanying Drawings, of which;
Fig. 1 is a front view of a gas barbeque grill not according to the invention employing a first accessory
Fig. 2 is a partial front view of the barbeque grill of Fig. 1 with the drawers of the accessory opened;
Fig. 3 is a partial cut-away front perspective view of the barbeque grill and accessory of Fig. 1;
Fig. 4 is a partial cut-away perspective view of the accessory of Fig. 1;
Fig. 5 is a partial perspective view of the accessory of Fig. 1;
Fig. 6 is a partial cut-away perspective view of the accessory of Fig. 1 with one of its drawers opened;
Fig. 7 is a partial cut-away rear perspective view of the barbeque grill and accessory of Fig. 1;
Figs. 8 and 9 are cut-away views showing the airflow through the accessory of Fig. 1;
Fig. 10 is a partial perspective view of the combustion enclosure of the accessory of Fig. 1;
Fig. 11 is a view of the burner of the accessory of Fig. 1;
Fig. 12 is a view of an alternate gas infrared burner for the accessory of Fig. 1;
Fig. 13 is a partial cut-away right-side perspective view of an individual module of an accessory in accordance with the invention;
Fig. 14 is a partial cut-away left-side perspective view of the accessory of Fig 13;
Fig. 15 is a left-side perspective view of the accessory of Fig 13 with its drawers removed;
Fig. 16 is a partial cut-away front perspective view of the accessory of Fig 13;
Fig. 17 is a partial cut-away frontal under view of the accessory of Fig 13;
Fig. 18 is a partial cut-away frontal over-view of the accessory of Fig 13;
Fig. 19 is a partial cut-away view of the accessory of Fig 13 taken at line 19-19 of Fig 14;
Fig. 20 is a partial cut-away frontal view of the accessory of Fig 13 in combination with a barbeque grill;
Fig. 21 is a partial cut-away frontal view of the accessory of Fig 13 in combination with an outdoor griddle;
Fig. 22 is a partial rear perspective view of a further accessory useful in practicing the invention;
Fig. 23 is a cut-away view of the heat exchanging system of the accessory of Fig 22;
Fig. 24 is a perspective view of the heat exchanging manifold of the accessory of Fig 22;
Fig. 25 is a partial view of the accessory of Fig 13 in combination with an outdoor griddle of Fig 21;
Fig. 26 is a cut-away view of a draw of the accessory of Fig 13; and
Fig. 27 is a perspective view of the removed tray of the accessory of Fig 13.

### DESCRIPTION OF EXEMPLARY EMBODIMENTS:

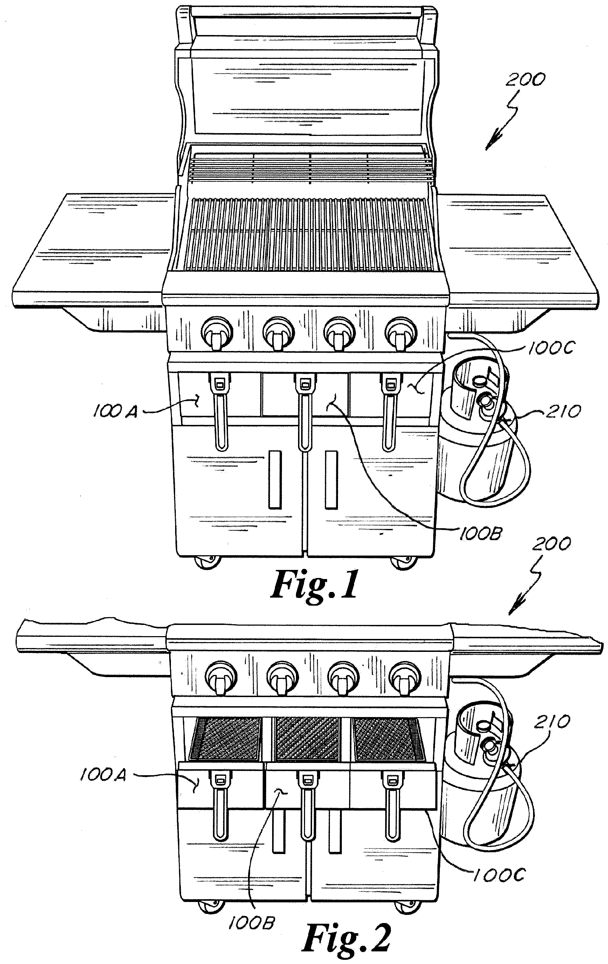

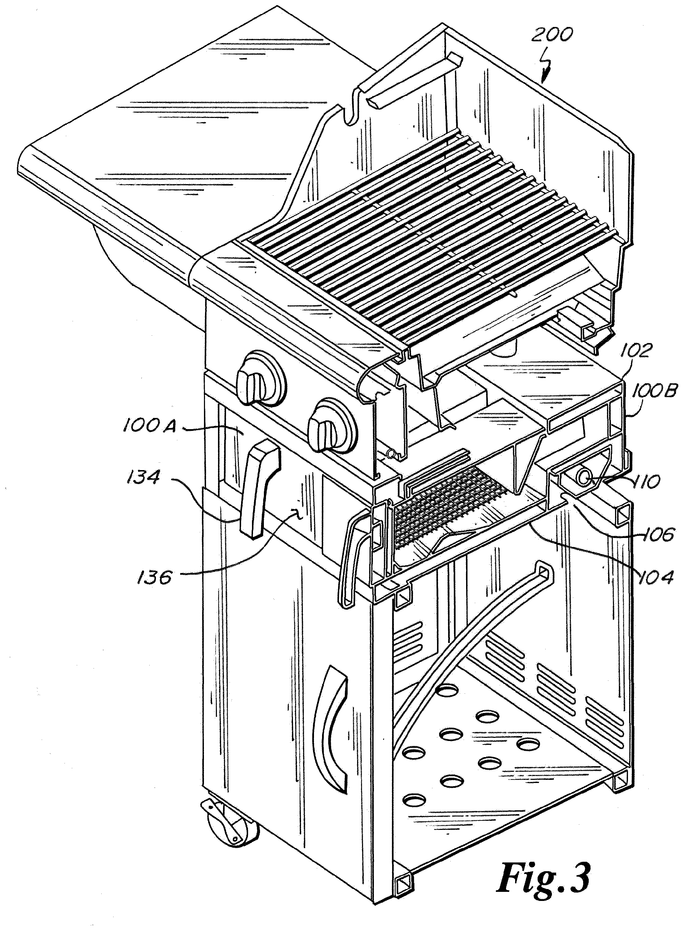

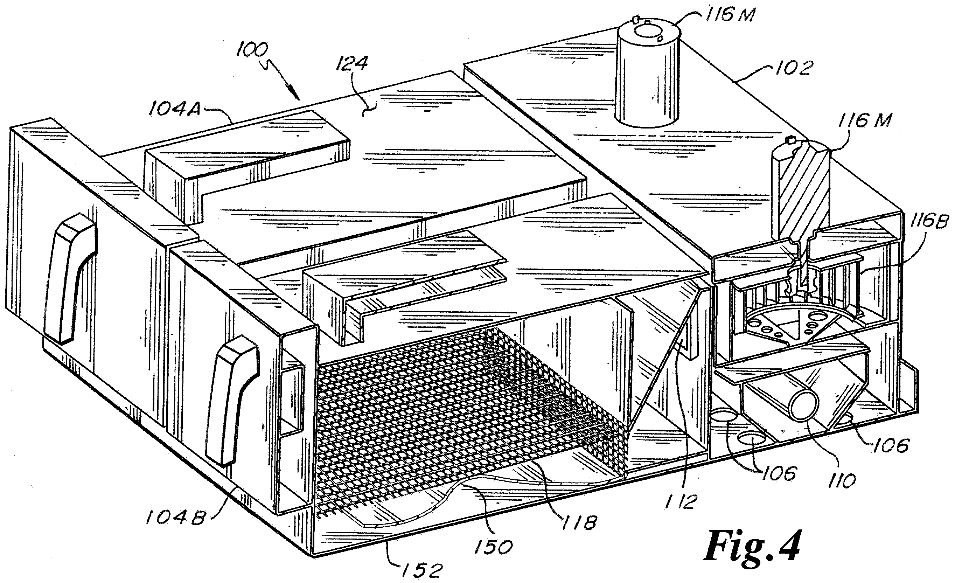

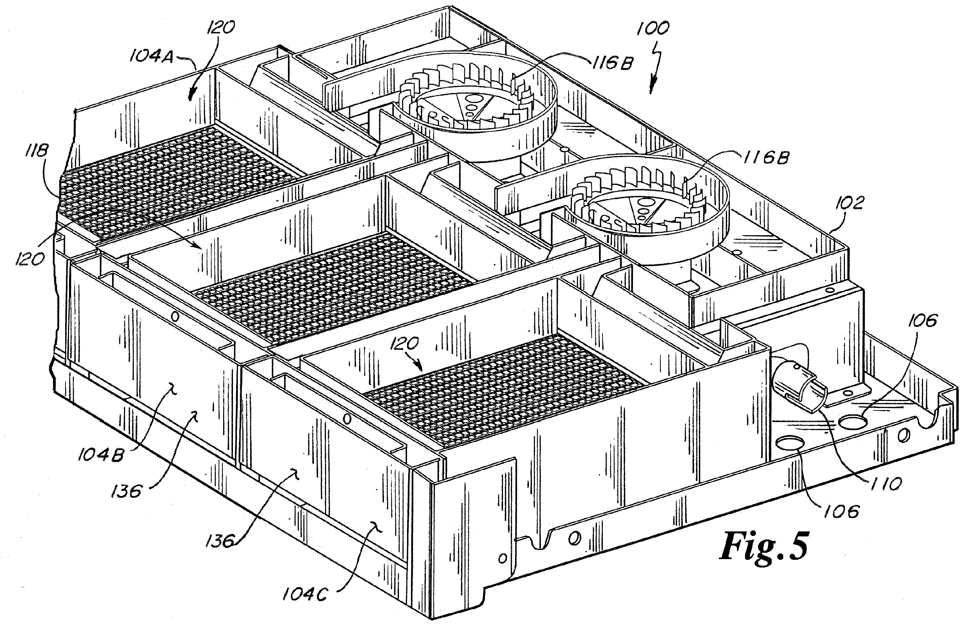

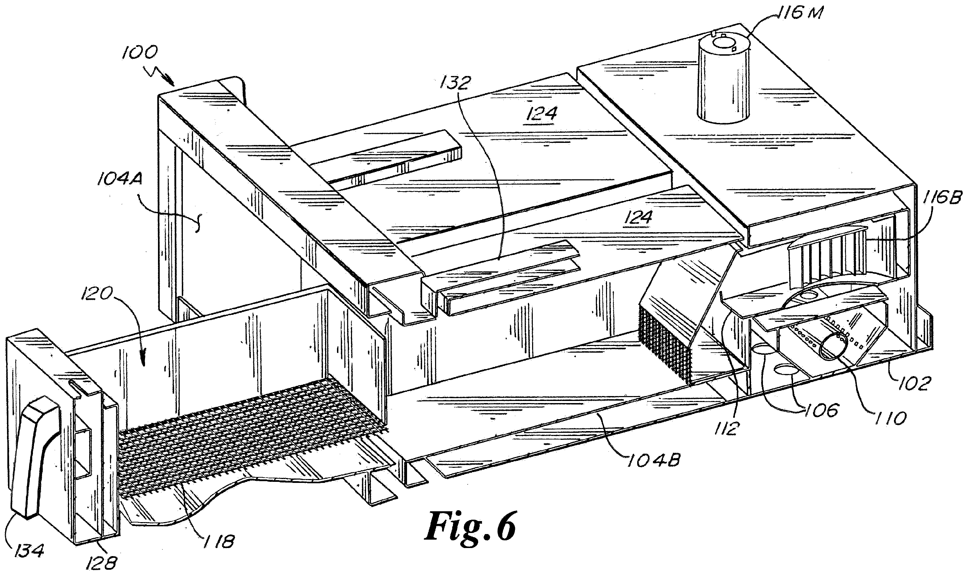

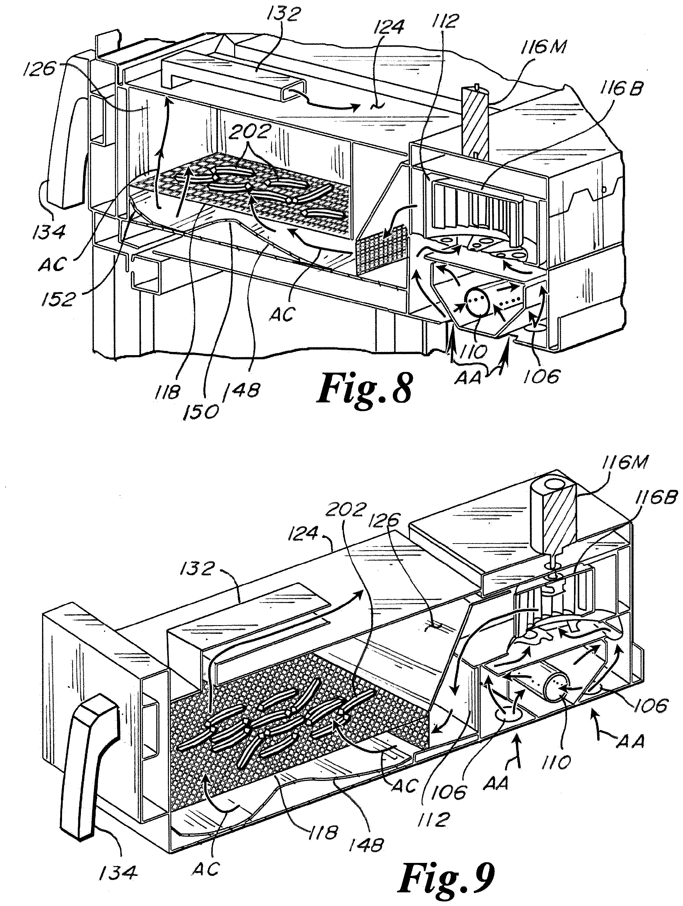

Referring to Figs 1 through 11, there is shown a first exemplary air frying accessory 100 which is not part of the claimed invention having a plurality of modules 100A, 100B, and 100C, and a gas barbeque grill 200 within which it is used. The air frying accessory and the barbeque grill both receive propane gas for burning from the same tank 210. But of course, the type of gas used for fuel could alternatively be any other available flammable gas, including such gases as natural gas, methane, butane, and mixed gases. The air frying modules are all the same, and having a plurality enables the user to air-fiy different foods at the same time or to stagger the timing of air-fried servings.

The air frying accessory has a blower-burner portion 102 and each module has a chamber portion 104A, 104B, and 104A (individually as 104). The blower-burner portion has intakes 106 for receiving ambient air AA, a burner 110 for heating the received air, a window 112 in communication with the chamber portion, and a blower for each module for dispersing the heated air 116 into the associated module's chamber portion. The blowers each include an electric motor 116M and a cylindrical blower wheel 116B. The chamber portion includes a perforated bottom panel 118 to thereby function as a perforated basket 120 for receiving foodstuff 202 and to allow access to the foodstuff by the dispersed heated air AC. The chamber portion is covered by chamber cover 124 so that the basket is enclosed within cooking chamber 126 during frying. The air heated by the burner is dispersed through the window to the chamber portion and into and around the foodstuff in the cooking chamber by the blower where it air-fries the foodstuff.

The blower-burner portion and the chamber portion are housed by the gas barbeque grill 200. The bottom of the chamber portion is a drawer 128 adapted to be pulled from the gas barbeque grill to access the basket. When the drawers are so pulled from the barbeque, covers 124 remain stationary within the barbeque. The open top of the drawer is thereby covered by the gas barbeque grill 200 during the air-frying and is uncovered when pulled from the gas barbeque grill to allow the access to the basket.

Each chamber portion includes an outlet 132 for exhausting the heated air from the chamber during cooking, so that freshly heated air may enter through the perforated bottom panel to maintain the desired temperature within the chamber.

Each drawer has a handle 134 disposed on its front face 136, and the outlet is directed rearwardly within the barbeque and away from the handle. In this way, the front of the barbeque, accessory, and handle do not become too hot to touch, and the exhausted hot air can be repurposed to add heat for the barbequing above.

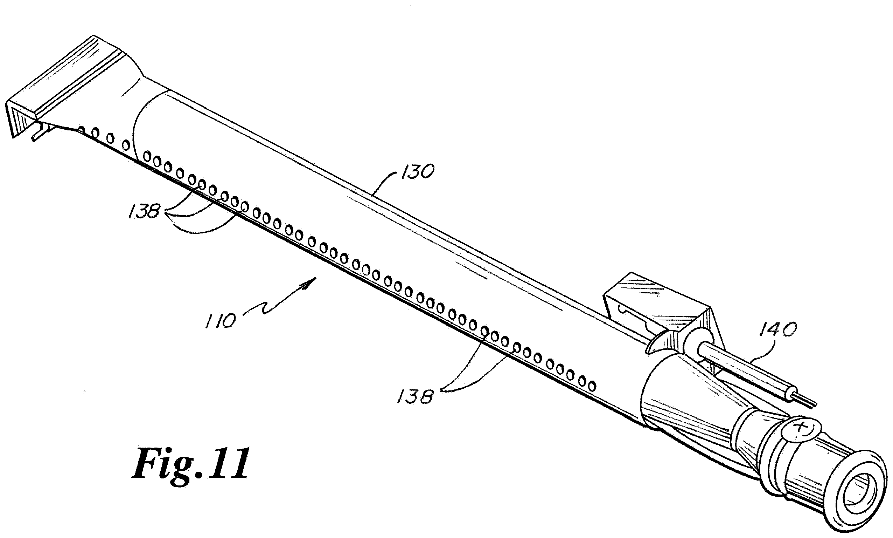

The burner 110 is shown independently in Fig 11 and is a typical tubular gas burner similar to those commonly used in gas barbeques, having an elongated stainless-steel tube 130 with a line of orifices 138 along each side. Gas flows from the orifices and is ignited by ignitor 140, which is a typical magneto spark-producing device common built into gas barbeques and actuated by a trigger button (not shown). The gas bums during frying to provide heat for frying.

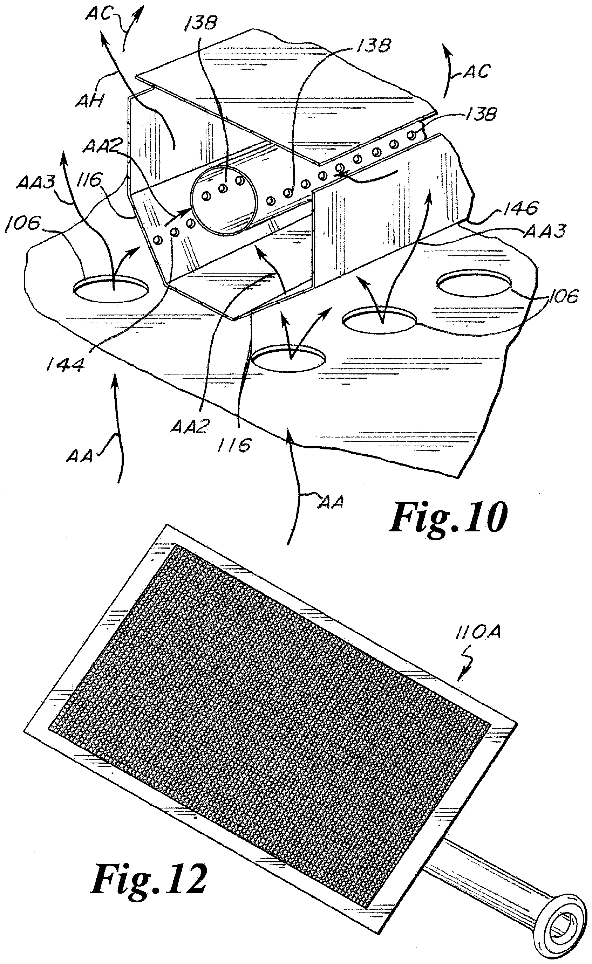

An alternative infrared gas burner 110A is shown in Fig. 12, which is similar to those commonly used in searing barbeques.

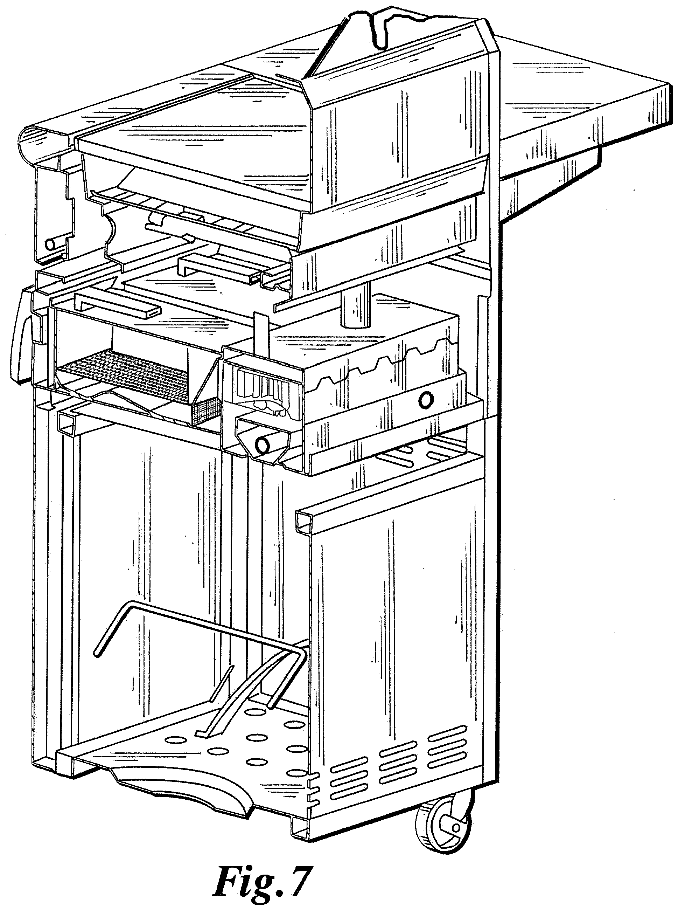

It is a unique feature of the burner and blower portion that the temperature of the flame is increased by the blower, by pulling ambient air AA in through ambient air intakes 106 at the bottom of the burner and blower portion and drawing some AA2 of that air through a line of ports 144 along the diagonal walls 116 along the bottom of the burner's stainless steel combustion enclosure 146. This is all best seen in Figs 7 through 9.

The ports are arranged parallel to and are directed at the line of orifices 138 of the burner and sized to force the incoming air into a series of linear air jets which impinge as upon the base of the flames exiting the orifices. This injects oxygen directly into the base of each flame and increases its temperature to over 1000C and increases the flame's intensity significantly. The air directed at the flame is strong enough to increase gas combustion but not strong enough to blow out the flame. The "super-heated" air AH that is thereby created is mixed with that portion AA3 of the ambient air that bypassed the combustion enclosure 146 to create cooking air AC of approximately 230C, which is then pulled by the blower and forced through window 112, through the perforated bottom panel 118 and into the basket, by which time the long and serpentine air path has cooled it to approximately 220C for cooking the food therein.

The injection of ambient air into the flame also causes the propane to burn more evenly and efficiently and reduces the production of undesirable CO and NOx gases.

Stainless steel wave panel 148 of the drawer serves the purpose of turbulizing and directing the cooking air as it enters the basket, which is important for evenly cooking and browning the food. The wave panel has two ramps 150 and 152 which are perpendicular to the airflow. Ramp 150 is impacted first by the heated air and causes some of the heated air to pass immediately through the perforated bottom panel and into the basket while allowing the remainder of the heated air to pass there-over and under the perforated bottom panel towards ramp 152, which then deflects that remining air towards and through the perforated bottom panel. This results in a very even distribution of the heated air through the perforated bottom panel while allowing it to remain in a very turbulent state, so that the food is exposed to the cooking air evenly on all sides and from all directions.

The cooking air is then exhausted through outlet 132, which directs it back away from the user-accessible front 154 of the accessory and into the interior of the barbeque grill... where it may be used to compliment the barbequing heat.

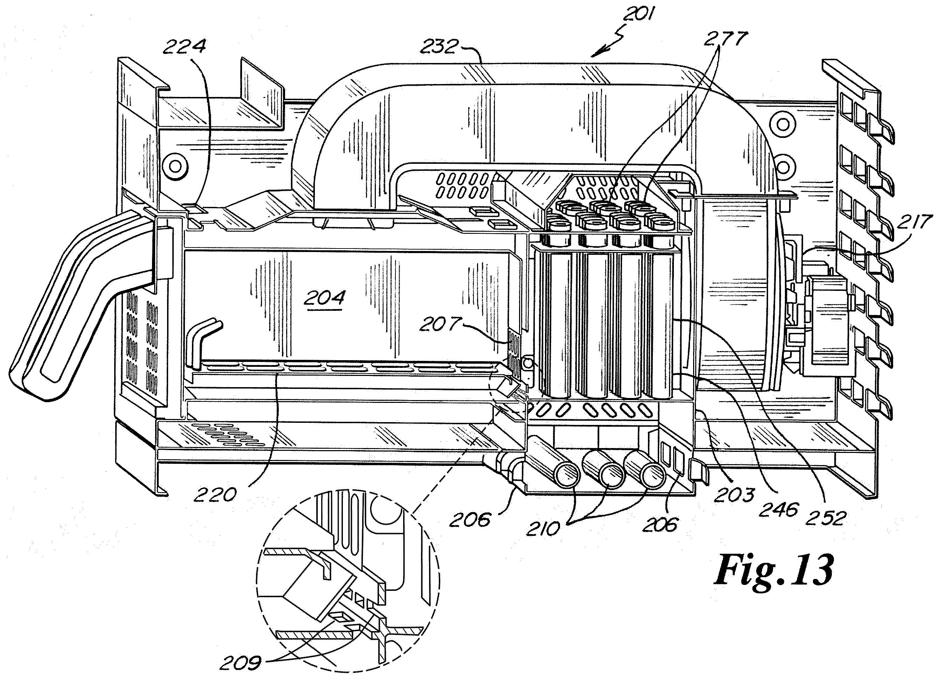

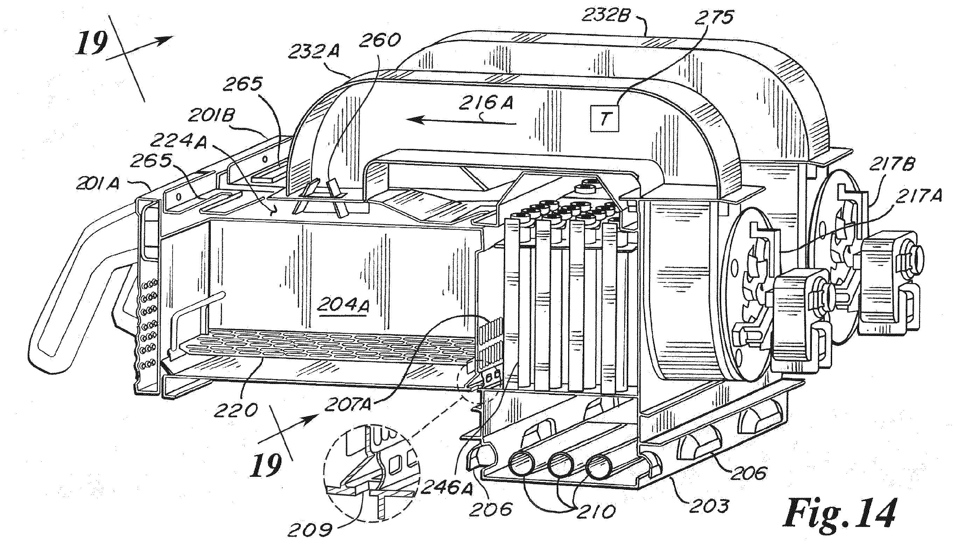

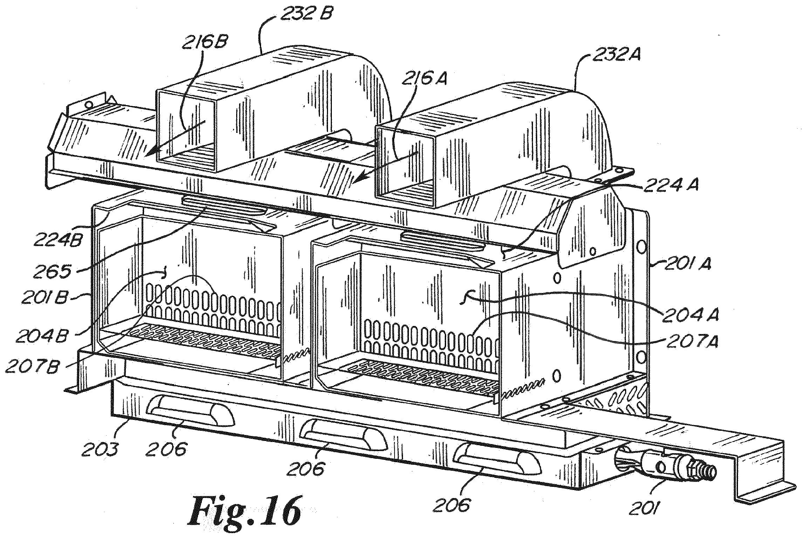

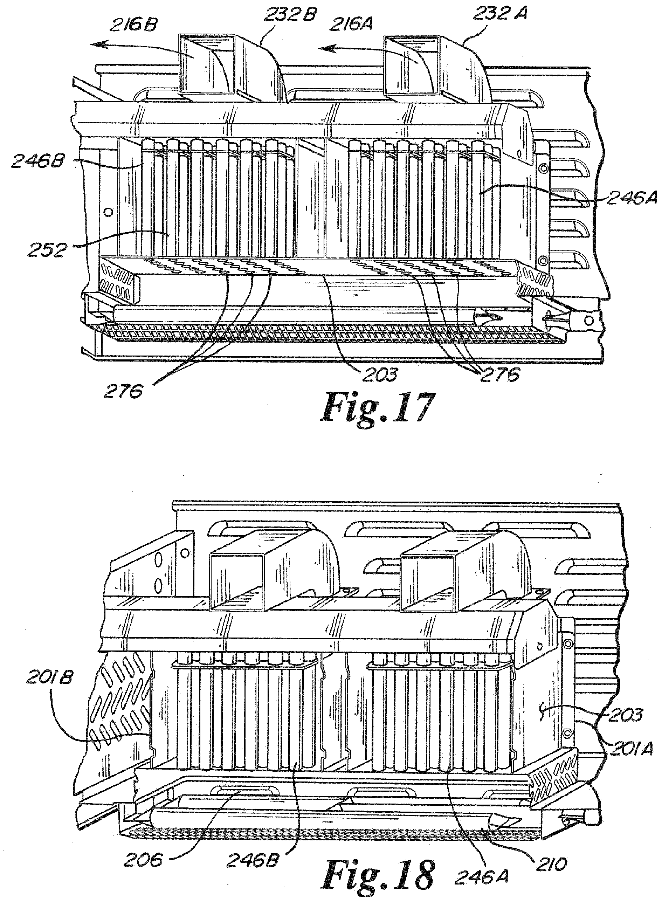

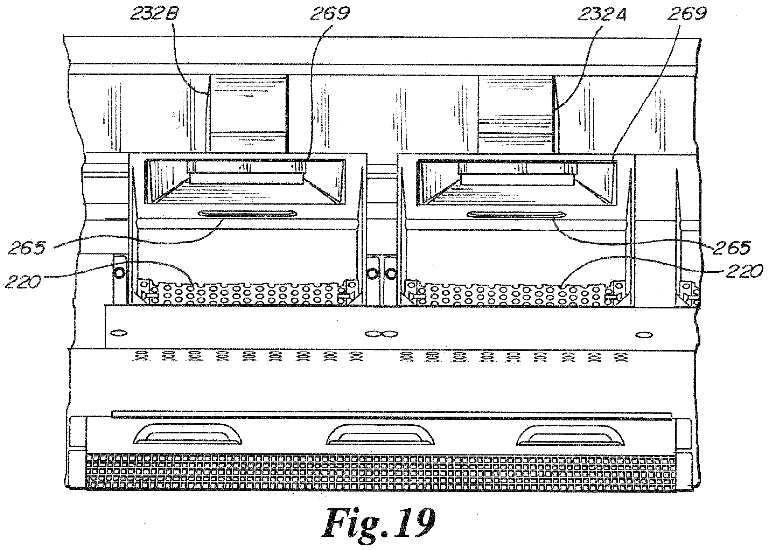

An air frying accessory 201 according to the invention having a plurality of modules 201A, 201B, and possible additional identical modules (not shown), for use with an outdoor cooking appliance is shown in Figs 13 through 21. Features equivalent to those of the first embodiment are not described in meticulous detail to avoid redundancy but should be assumed the same as or equivalent to those in the previous embodiment where not stated otherwise. The air frying accessory and the outdoor cooking appliance may both again receive propane gas for burning from the same tank or may employ some other type of combustible gas or other fuel.

The air frying modules share a single heat exchanging system 203. Each module has a chamber portion 204A, 204B, etc. (individually as 204). The heat exchanging system has intakes 206 for receiving ambient air, an H-shaped burner 210 for combusting the propane gas to combine with and heat the received ambient air to create a heated mixture or air and products of combustion, a heat exchanging manifold, 246A, 246B, etc. (individually as 246) in thermal communication with the burner and the chamber portions, a blower 217A, 217B, etc. (individually as 217) for each module for passing a second stream of frying air through the heat exchanging manifold to draw heat there-from to heat the second stream into heated frying air 216 and to continuously provide the heated frying air into the associated module's chamber portion, and an array of exhaust openings 207A, 207B, etc. (individually as 207) for pulling the combusted gas mixture after its heat has been absorbed by the heat exchanging manifold. Each blower may be operated independently as with the first embodiment, thereby allowing only one or a selected number of the chamber portions to be heated at a time, as needed.

The heat exchanging system allows foodstuff to be cooked in heated frying air that does not include any products of combustion, because none of the burned propane is disbursed into the cooking chambers. This improves the taste, appearance, and healthfulness of the cooked foodstuff. And the heat exchanging system allows for greatly increased air frying temperatures by recycling the heated frying air continuously there-through, where it picks up more and more heat on each pass.

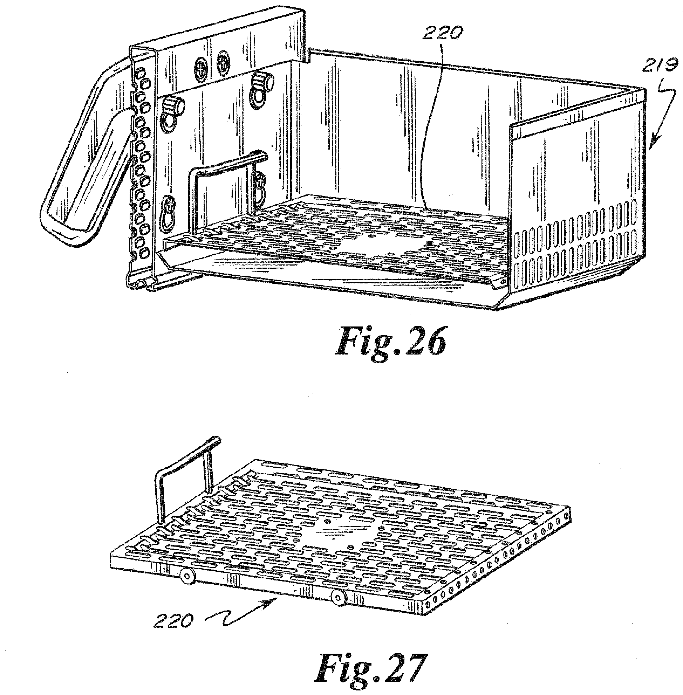

The blowers each include an electric motor and a cylindrical blower wheel for moving the heated second airstream, a blower intake through which heated air is pulled from the heat exchanging manifold, and a blower exhaust through which the heated air is sent to the cooking chamber portion. Each chamber portion includes a perforated tray 220, similar to the basket of the first embodiment, for receiving the foodstuff and to allow exposure of the foodstuff to the heated frying air 216. The tray is removable from drawer 219 as seen in Figs 26 and 27 for serving and washing. A portion of the air moved by the blower feeds the flame to insure complete combustion of the fuel for maximum flame temperature and increased air temperature.

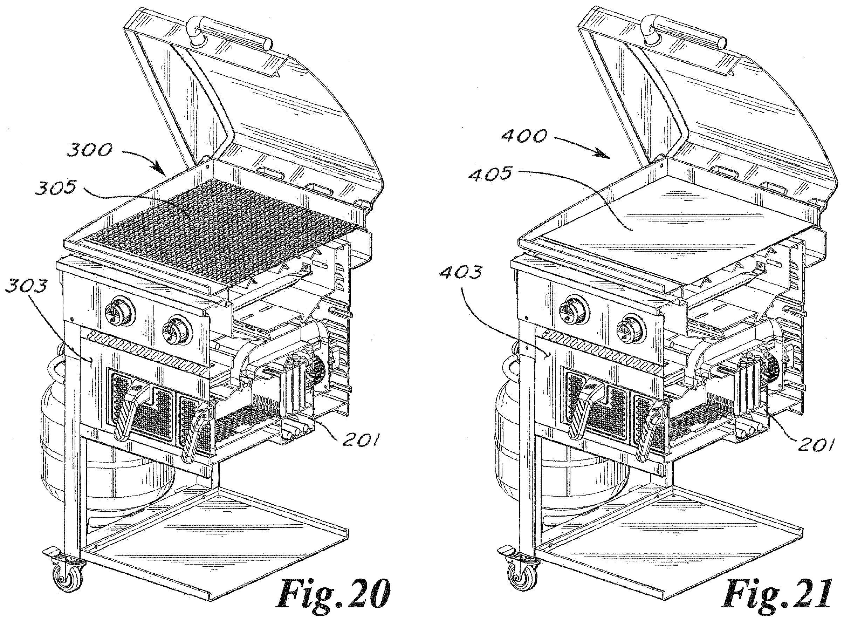

Each chamber portion is covered by a chamber cover 224A, 224B, etc. (individually as 224) so that the tray is enclosed within an associated cooking chamber 220 during frying. Each chamber cover communicates with a recycling duct 232A, 232B, etc. (individually as 232) which allows the heated frying air to continuously enter the chamber, cook the food therein, and return to the associated blower's intake after passing through the heat exchanging manifold to continuously increase its temperature. By repeatedly passing the heated air through the heat exchanging system, its temperature is much increased over that possible purely from burning propane with relatively cool incoming ambient air. Ultimately, the temperature in the cooking chamber can reach as high as 246°C (450°F). When mounted within a barbeque 300 as shown in Fig 20 or within an outdoor griddle 400 as in Fig 21 and the barbeque or griddle is in operation, the temperature in the cooking chamber can reach 246°C (450°F).

The air that is drawn into the blowers to form the frying air is a combination of recirculated previously heated air and fresh air drawn in through intake slots 209. The frying may cause smoke and humidity during cooking and vents 265 allow some of the smoky humid frying air to be exhausted at the same rate that fresh air is drawn in through the slots so that the smoky humid frying air is continuously replaced by the fresh air entering the slots. By limiting the size of the slots and vents, this amount of exchanged air is minimal so that the temperature of the frying air is not significantly reduced.

The blower pushes the heated frying air into the tops of the cooking chambers through the recycling ducts 232 and cover openings 269, where louvers 260 deflect it and cause it to be disbursed evenly throughout the cooking chamber. The blower simultaneously pulls the heated frying air from the chamber through an array of perforations 207 at the back bottom of each chamber, whereby the air is pulled again through the heat exchanging manifold.

An optional thermostat 275 communicating thermally with the heated frying air may be disposed anywhere within the heated frying air's flow path to monitor its temperature and may control the burner and/or the blower to regulate heating by the burner and/or airflow by the blower when a preselected cooking chamber temperature is reached, thereby maintaining the cooking chamber temperature at the preselected temperature. The thermostat is adjustable to allow the temperature in the cooking chamber to be vary from 149°C to 246°C (300°F to 475°F).

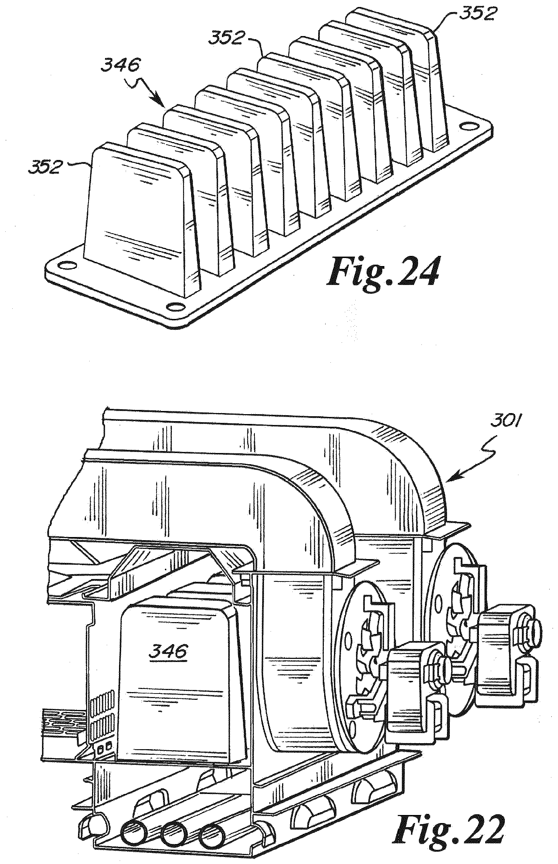

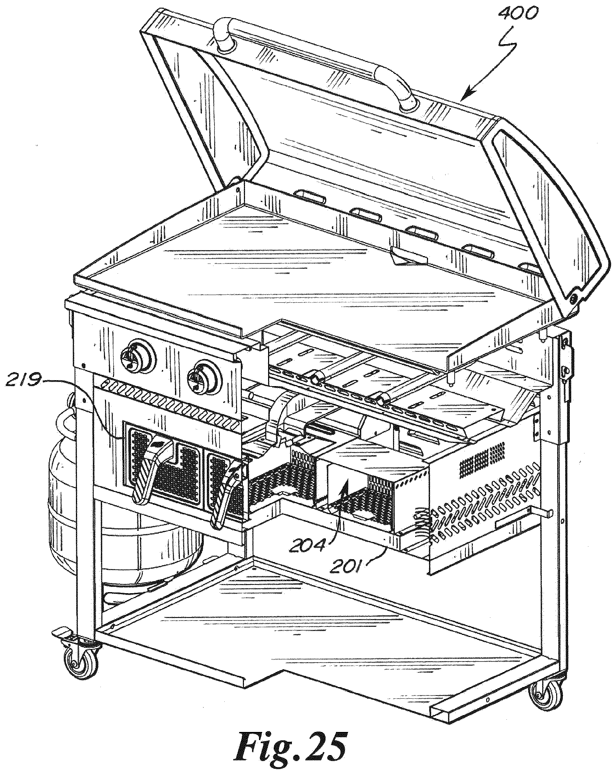

The accessory may be embodied independently as a stand-alone appliance, or housed by an outdoor cooking appliance similar to the first embodiment, as shown in Figs 20, 21 and 25. Fig 20 shows the accessory combined into a barbeque grill 300 with body 303 and cooking surface (grill) 305. Figs 22 and 25 show the accessory combined into an outdoor griddle appliance 400 with body 403 and cooking surface (griddle 405). The bottoms of the chamber portions are similarly drawers adapted to be pulled from the cooking appliance's body 303 or 403 to access their trays. When one of the drawers is so pulled from the barbeque, cover 224 remains stationary within the barbeque. The open top of the drawer is thereby covered by the gas outdoor cooking appliance during the air-frying and is uncovered when pulled from the appliance to allow access to the drawer's tray.

The heat exchanging manifold 246 of this embodiment is made up of an array of hollow tubes 252 with open bottoms 276 through which the combusted gas can enter and open tops 277 through the combusted gas can escape. The tubes are equally spaced apart to provide a consistent temperature across the heat exchanging manifold and avoid hot and cold spots. The tubes are preferably made of thin-walled metal chosen for heat transfer efficiency and durability, and instantly absorb the heat from the combusted gas rising there-through. Preferably

Burner 210 is an "H" version of the one shown independently in Fig 11 and previously described. Gas flows from their orifices and is ignited by an ignitor as in the first embodiment. The gas burns during operation, is fed by and mixed with the incoming ambient air and rises into the chimneys to heat the manifold. The thinness of the tubes enables the heat absorbed from the combusted gas to be instantly realized at the exteriors of the tubes, which are exposed to the flow of the frying air stream. The heat within the pockets is thereby transferred into the frying airstream while the products of combustion in the gas mixture within the pockets are not.

The combusted gas mixture is continuously exhausted through outlet 359 at the left end of the heat exchanger so that it is directed away from the intakes of the cooking chambers.

The outdoor cooking appliance also has a warming chamber (not shown) for maintaining cooked food at a servable temperature. The warming chamber is disposed within a drawer that is fashioned similarly to the cooking chamber drawers 219 and the drawer is positioned in line with the cooking chamber drawers. The warming chamber is preferably warmed by a combination of conduction and convection from the adjacent cooking chambers and the outdoor cooking appliance but may alternatively be warmed by a lower-temperature version of the heating system of the cooking chambers.

A third exemplary air frying accessory 301 similar to the second embodiment except having a different heat exchanging system is shown in Figs 21 through 23. Features equivalent to those of the earlier embodiments are not described to avoid redundancy. The air frying modules again share the single heat exchanging system.

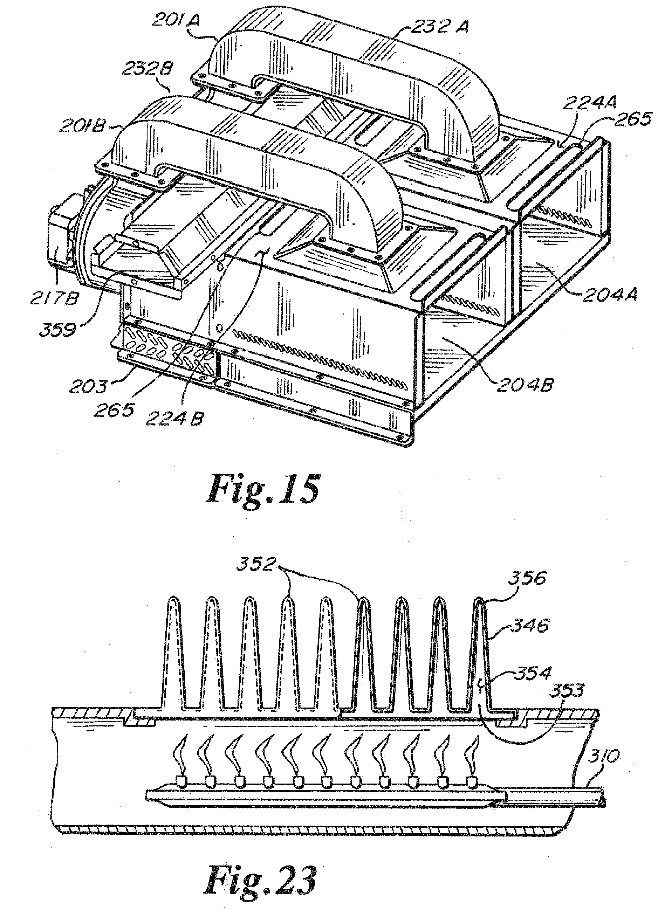

The heat exchanging manifold 346 of this embodiment is best understood by reference to Figs 23 and 24. It is made up of a series of hollow fins 352, each having an open bottom 353 so that a hollow pocket 354 is formed within the fin that is accessible from its underside, and having a heat-radiating domed topside 356. The exchanger is preferably made of thin-walled diecast aluminum, chosen again for its heat transfer efficiency.

Burner 310 is similar to that shown independently in Fig 11 and previously described. Gas flows from its orifices and is ignited by an ignitor as in the previous embodiments. The gas burns during operation, is fed by and mixed with the incoming ambient air and rises into the hollow pockets to heat the fins. The thinness of the fins enables the heat absorbed from the pockets to be instantly realized at the domed topsides, which are exposed to the flow of the frying air stream. The heat within the pockets is thereby transferred into the frying airstream while the products of combustion in the gas mixture within the pockets are not.

The combusted gas mixture is continuously exhausted through an outlet similar to the previous embodiment.

While the air frying modules of all three embodiments are shown as built-in accessories to a barbeque grill, one or more modules could alternatively be enclosed within a dedicated housing to provide an independent stand-alone gas-powered air frying appliance. In all cases, the bottoms of the chamber portions are drawers 219 adapted to be pulled from the outdoor cooker's or the apparatus' housing to access the tray. When a drawer is so pulled from the barbeque, its cover remains stationary within the housing. The open top of the drawer is thereby covered by the housing during air-frying and is uncovered when pulled from the housing to allow access to the drawer's tray.

## Claims

1. An air frying apparatus (201) comprising a burner (210), a blower (217A, 217B), a heat exchanger (203), and a cooking chamber (204A, 204B);
the burner (210) adapted to combust fuel to create heat and other products of combustion;
the blower (217A, 217B) adapted to circulate a cooking airstream;
the heat exchanger (203) adapted to allow passage of the heat from the combusted fuel while preventing passage of the other products of combustion into the cooking air stream;
wherein the blower (217A, 217B) is further adapted to supply the heated cooking airstream from the heat exchanger (203) to the cooking chamber (204A, 204B) to cook foodstuff disposed therein, whereby the other products of combustion are not supplied to the cooking chamber (204A, 204B), **characterized in that**
the outlet of the blower (217) is arranged between the outlet of the heat exchanger (203) and the cooking chamber (204).

2. The apparatus of claim 1 wherein the burner (210) is a gas burner.

3. The apparatus of claim 1 or claim 2 wherein the blower (217) is an electric blower.

4. The apparatus of any preceding claim further comprising a housing and wherein the cooking chamber (204) comprises a perforated tray (220) for containing the foodstuff, disposable within the housing during cooking and removable from the housing to access the foodstuff.

5. The apparatus of claim 4 wherein the tray is covered by the housing during cooking and is uncovered when removed from the housing to allow the access to the tray (220).

6. The apparatus of any preceding claim further comprising an outdoor cooking appliance having a body (303) comprising the housing.

7. The apparatus of claim 6 wherein the outdoor cooking appliance comprises a cooking surface (305) from the group including a grill and a griddle; and wherein the burner (210), blower (217), heat exchanger (203), and cooking chamber (204) are disposed below the cooking surface.

8. The apparatus of any preceding claim, further comprising a thermostat (275) adapted for sensing temperature of the heated cooking airstream and in communication with one or both of the blower (217) and the burner (210) and adapted to control the one or both in response to the sensed temperature.

9. The apparatus of claim 8 further comprising a selected temperature level and wherein the thermostat (275) modifies operation of the one or both when the sensed temperature reaches the selected temperature.

10. The apparatus of claim 9 further comprising one or more additional cooking chambers (204) and one or more additional blowers (217) adapted to selectively supply one or more additional heated cooking airstreams through the heat exchanger (203) to the one or more additional cooking chambers (204) to selectively cook foodstuff disposed therein.

11. The apparatus of claim 6, wherein the burner (210) is a frying burner and wherein the apparatus further comprising a fuel supply tank and a grilling burner and wherein the fuel supply tank provides fuel to both the frying burner (210) and the grilling burner.

## Patentansprüche

1. Luftfrittiergerät (201), umfassend einen Brenner (210), ein Gebläse (217A, 217B), einen Wärmetauscher (203) und eine Kochkammer (204A, 204B);
wobei der Brenner (210) ausgelegt ist, um Brennstoff zum verbrennen, um Wärme und andere Verbrennungsprodukte zu erzeugen;
wobei das Gebläse (217A, 217B) ausgelegt ist, um einen Kochluftstrom umzuwälzen;
wobei der Wärmetauscher (203) ausgelegt ist, um den Durchgang der Wärme vom verbrannten Brennstoff zu ermöglichen, während der Durchgang der anderen Verbrennungsprodukte in den Kochluftstrom verhindert wird;
wobei
das Gebläse (217A, 217B) ferner ausgelegt ist, um den erwärmten Kochluftstrom vom Wärmetauscher (203) der Kochkammer (204A, 204B) zuzuführen, um darin befindliche Lebensmittel zu kochen, wobei die anderen Verbrennungsprodukte der Kochkammer (204A, 204B) nicht zugeführt werden, **dadurch gekennzeichnet, dass**
der Auslass des Gebläses (217) zwischen dem Auslass des Wärmetauschers (203) und der Kochkammer (204) angeordnet ist.

2. Gerät nach Anspruch 1, wobei der Brenner (210) ein Gasbrenner ist.

3. Gerät nach Anspruch 1 oder Anspruch 2, wobei das Gebläse (217) ein elektrisches Gebläse ist.

4. Gerät nach einem der vorhergehenden Ansprüche, ferner umfassend ein Gehäuse und wobei die Kochkammer (204) ein wegwerfbares perforiertes Tablett (220) zur Aufnahme des Lebensmittels umfasst, das während des Kochens in das Gehäuse hinein und aus dem Gehäuse herausgenommen werden kann, um an das Lebensmittel zu gelangen.

5. Gerät nach Anspruch 4, wobei das Tablett durch das Gehäuse während des Kochens abgedeckt ist und beim Herausnehmen aus dem Gehäuse freigelegt wird, um den Zugang zum Tablett (220) zu ermöglichen.

6. Gerät nach einem der vorhergehenden Ansprüche, ferner umfassend ein Außenkochgerät, das einen Körper (303) aufweist, der das Gehäuse umfasst.

7. Gerät nach Anspruch 6, wobei das Außenkochgerät eine Kochfläche (305) aus der Gruppe umfasst, die einen Grill und ein Backblech beinhaltet; und wobei der Brenner (210), das Gebläse (217), der Wärmetauscher (203) und die Kochkammer (204) unterhalb der Kochfläche befindlich sind.

8. Gerät nach einem der vorhergehenden Ansprüche, ferner umfassend einen Thermostat (275), der ausgelegt ist, um die Temperatur des erwärmten Kochluftstroms zu erfassen, und mit einem oder beiden von dem Gebläse (217) und dem Brenner (210) in Verbindung steht und ausgelegt ist, um das eine oder beide als Reaktion auf die erfasste Temperatur zu steuern.

9. Gerät nach Anspruch 8, ferner umfassend ein ausgewähltes Temperaturniveau und wobei der Thermostat (275) den Betrieb des einen oder beider ändert, wenn die erfasste Temperatur die ausgewählte Temperatur erreicht.

10. Gerät nach Anspruch 9, ferner umfassend eine oder mehrere zusätzliche Kochkammern (204) und ein oder mehrere zusätzliche Gebläse (217), die ausgelegt sind, um selektiv einen oder mehrere zusätzliche erwärmte Kochluftströme durch den Wärmetauscher (203) der einen oder den mehreren zusätzlichen Kochkammern (204) zuzuführen, um das darin befindliche Lebensmittel selektiv zu kochen.

11. Gerät nach Anspruch 6, wobei der Brenner (210) ein Bratbrenner ist und wobei das Gerät ferner einen Brennstoffvorratstank und einen Grillbrenner umfasst und wobei der Brennstoffvorratstank sowohl dem Bratbrenner (210) als auch dem Grillbrenner Brennstoff bereitstellt.

## Revendications

1. Appareil de friture à air (201) comprenant un brûleur (210), un ventilateur soufflant (217A, 217B), un échangeur de chaleur
(203) et une chambre de cuisson (204A, 204B) ;
le brûleur (210) étant adapté pour brûler un combustible afin de créer de la chaleur et d'autres produits de combustion ;
le ventilateur soufflant (217A, 217B) étant adapté pour faire circuler un flux d'air de cuisson ;
l'échangeur de chaleur (203) étant adapté pour permettre le passage de la chaleur du combustible brûlé tout en empêchant le passage des autres produits de combustion dans le flux d'air de cuisson ;
ledit ventilateur soufflant (217A, 217B) étant en outre adapté pour fournir le flux d'air de cuisson chauffé provenant de l'échangeur de chaleur (203) à la chambre de cuisson (204A, 204B) pour cuire les aliments qui sont disposés dans celle-ci, moyennant quoi les autres produits de combustion ne sont pas
fournis à la chambre de cuisson (204A, 204B), **caractérisé en ce que**
la sortie du ventilateur soufflant (217) est agencée entre la sortie de l'échangeur de chaleur (203) et la chambre de cuisson (204).

2. Appareil selon la revendication 1, ledit brûleur (210) étant un brûleur à gaz.

3. Appareil selon la revendication 1 ou la revendication 2, ledit ventilateur soufflant (217) étant un ventilateur soufflant électrique.

4. Appareil selon une quelconque revendication précédente, comprenant en outre un boîtier et ladite chambre de cuisson (204) comprenant un plateau perforé (220) destiné à contenir les aliments, pouvant être disposé à l'intérieur du boîtier durant la cuisson et amovible du boîtier pour accéder aux aliments.

5. Appareil selon la revendication 4, ledit plateau étant recouvert par le boîtier durant la cuisson et étant découvert lorsqu'il est retiré du boîtier pour permettre l'accès au plateau (220).

6. Appareil selon une quelconque revendication précédente, comprenant en outre un appareil domestique de cuisson extérieur possédant un corps (303) comprenant le boîtier.

7. Appareil selon la revendication 6, ledit appareil domestique de cuisson extérieur comprenant une surface de cuisson (305)
parmi le groupe comprenant un grill et une plaque à frire ; et ledit brûleur (210), ledit ventilateur soufflante (217), ledit échangeur de chaleur (203) et ladite chambre de cuisson (204) étant disposés sous la surface de cuisson.

8. Appareil selon une quelconque revendication précédente, comprenant en outre un thermostat (275) adapté pour détecter la température du flux d'air de cuisson chauffé et en communication avec le ventilateur soufflant (217) et/ou le brûleur (210) et adapté pour commander l'un ou les deux en réponse à la température détectée.

9. Appareil selon la revendication 8, comprenant en outre un niveau de température choisi et ledit thermostat (275) modifiant le fonctionnement de l'un ou des deux lorsque la température détectée atteint la température choisie.

10. Appareil selon la revendication 9, comprenant en outre une ou plusieurs chambres de cuisson supplémentaires (204) et un ou plusieurs ventilateurs soufflants supplémentaires (217) adaptés pour fournir sélectivement un ou plusieurs flux d'air de cuisson chauffés supplémentaires à travers l'échangeur de chaleur (203) à la ou les chambres de cuisson supplémentaires (204) pour cuire sélectivement les aliments qui sont disposés dans celle-ci.

11. Appareil selon la revendication 6, ledit brûleur (210) étant un brûleur de friture et ledit appareil comprenant en outre un réservoir d'alimentation en combustible et un brûleur de gril et ledit réservoir d'alimentation en combustible fournissant du combustible à la fois au brûleur de friture (210) et au brûleur de gril.
